# EUROPEAN PATENT APPLICATION

(11) **EP 2 270 905 A1**
(43) Date of publication of application: **05.01.2011**
(21) Application number: 09275043.9
(22) Date of filing: 15.06.2009
(51) Int. Cl.: H01M 4/86, H01M 12/06, H01M 4/88

(54) **Metal-air electrochemical cells and methods of manufacturing same**

(71) Applicant: BAE Systems PLC, 6 Carlton Gardens London SW1Y 5AD (GB)
(72) Inventor: Dunleavy, Michael, Bristol, BS34 7QW (GB); Haq, Sajad, Bristol, BS34 7QW (GB); Hucker, Martyn John, Bristol, BS34 7QW (GB)
(74) Representative: BAE SYSTEMS plc Group IP Department

(57) **Abstract**

According to the invention there is provided a metal-air electrochemical cell including a solid cathode structure and a cathode current collector in conductive communication with the cathode structure, in which the cathode structure has an electrolyte facing surface which forms an interface with an electrolyte;
wherein the cathode structure includes at least one of: an electrolyte facing surface having a convoluted topology at a micro scale or nano scale, providing a high surface area in comparison to a planar surface; a substantially oxygen permeable additive; and a porous additive which is substantially porous to oxygen, thereby enhancing oxygen availability at the electrolyte facing surface and/or enhancing oxygen transport across the cathode structure.

## Description

Lithium-air cells are well-known batteries which have attracted a great deal of interest owing to their extremely high theoretical power energy densities. However, to date the energy densities which have been obtained in practice are considerably below the theoretically achievable levels.

The present invention, in at least some of its embodiments, addresses this problem and provides improved lithium-air cells and methods of manufacturing same. The invention applies also to other forms of metal-air cells.

According to a first aspect of the invention there is provided a metal-air electrochemical cell including a solid cathode structure and a cathode current collector in conductive communication with the cathode structure, in which the cathode structure has an electrolyte facing surface which forms an interface with an electrolyte;
wherein the cathode structure includes at least one of: an electrolyte facing surface having a convoluted topology at a micro scale or nano scale, providing a high surface area in comparison to a planar surface; a substantially oxygen permeable additive; and a porous additive which is substantially porous to oxygen, thereby enhancing oxygen availability at the electrolyte facing surface and/or enhancing oxygen transport across the cathode structure.

The present inventors have realised that metal-air electrochemical cells are limited by the amount of oxygen that can participate in the cell chemistry, and that in turn this is limited by the available surface area of the cathode structure and the rate of oxygen transport through the cathode structure. Accordingly, the present inventors have devised metal-air electrochemical cells which provide a high surface area at the cathode and/or permit an enhanced rate of oxygen transport across the cathode structure.

For the avoidance of doubt, the term 'micro scale' refers to a scale in the range 1 to 999 microns, and the term 'nano scale' refers to a scale in the range 1 to 999 nm. Also for the avoidance of doubt, the term "polymer" as used herein is understood to include reference to co-polymers as well as homopolymers. The term solid is intended to be interpreted broadly to include gels, sintered materials particulate materials and semi-solids etc.

Typically, a metal-air electrochemical cell includes an anode formed from an electropositive metal, an electrolyte in communication with the anode and also in communication with a cathode structure. The cathode structure is an air cathode which has a surface which is in communication with the atmosphere, typically through an oxygen permeable interface structure such as an oxygen permeable membrane. The cell may further include one or more separators, such as a separator positioned between the anode and the electrolyte and/or a separator positioned between the cathode structure and electrolyte. Generally, the anode is in conductive communication with an anode current collector.

Typically, the cathode structure includes a conductive cathode material, at least one supporting matrix material and a catalyst. Generally with a solid cathode structure, the conductive cathode material is able to intercalate ions of the metal that the anode is formed from, i.e., in a lithium-air electrochemical cell, Li+ ions would be intercalated by the conductive cathode material. Carbon may be used as the conductive cathode material. The catalyst may manganese dioxide, although other catalysts used in metal-air cells may be employed.

The supporting matrix material may be a suitable binder, although in preferred embodiments which utilise a substantially oxygen permeable additive, the substantially oxygen permeable additive acts as a supporting matrix material, either solely or in combination with other one or more other supporting matrix materials.

Advantageously, the substantially oxygen permeable additive is an oxygen permeable siloxane, such as polydimethylsiloxane. In other preferred embodiments, the substantially oxygen permeable additive is a cellulose polymer such as a butyl cellulose, for example cellulose acetate butyrate. When a porous additive is employed, the porous additive is preferably a gel such a silica gel.

There are a number of ways of realising embodiments in which the electrolyte facing surface has a convoluted typology. Advantageously, the cathode structure includes nano structures thereby providing an electrolyte facing surface having a convoluted topology. The nano structures may be formed from carbon, and are preferably carbon nanotubes or graphene nanoribbons.

Additionally, or alternatively, the electrolyte facing surface may be etched or embossed, thereby providing the convoluted topology. Nano and micro engineering processes might be employed in order to achieve etching or embossing at the nano and/or micro scale. For example, so called "Gecko feet" or other large area structures might be realised.

Advantageously, the electrolyte facing surface is formed from partially coalesced particles, thereby providing a convoluted topology. An appropriate spraying process can be used to form the cathode structure from partially coalesced particles, which can lead to a highly porous and/or permeable surface topology at the nano and/or micro scale.

Preferably, the cathode structure further includes electrically conductive metal particles. The electrically conductive metal particles may be of micro or nanoscale. Suitable examples include spiky nickel, fine nickel fibre or whiskers and nano powder. This can increase the electrical conductivity and electrical permeation of the cathode structure and enhance improve electrical transport between the reaction sites on the cathode structure and the cathode current collector.

Advantageously, the concentration of the conductive cathode material is graded from the cathode current collector to the electrolyte facing surface so that the highest conductive cathode material concentration is at the electrolyte facing surface. In this way, the content of the conductive cathode material is greatest at the electrolyte facing surface where maximum activity occurs. Advantageously, the concentration of the substantially oxygen permeable additive and/or the concentration of the electrically conductive metal particles is graded from the cathode current collector to the electrolyte facing surface so that the highest substantially oxygen permeable additive concentration and/or the highest electrically conductive metal particle concentration is at the cathode current collector. By reducing the content of the conductive cathode material and increasing the content of the substantially oxygen permeable additive and electrically conductive metal particles, the transport of oxygen and electrons through the cathode structure can be enhanced.

Advantageously, the metal-air electrochemical cell further includes a solid electrolyte. The solid electrolyte may include a polymer matrix containing metal salts. The polymer matrix may be formed from a polyethylene oxide polymer such poly(ethylene glycol) acrylate polymer. The use of a solid electrolyte obviates problems associated with fluid leakage, imparts structural resilience, and provides an improved interface with cathode structure.

Preferably, the metal-air cell is a lithium-air cell. Other forms of metal-air cells, such as an aluminium-air cell or a zinc-air cell may be provided.

According to a second aspect of the invention there is provided a method of manufacturing a metal-air electrochemical cell including the step of forming a solid cathode structure by depositing material in a spraying process.

Other components of the electrochemical cell may be formed in a spraying process, and in fact it is possible to form the entire electrochemical cell by employing spray processes. Advantageously, the method further includes a step of forming a solid electrolyte by depositing material in a spraying process.

The method may further include the step of forming a solid anode structure by depositing metal in a spraying process.

Advantageously, during the step of performing a solid cathode structure, the spraying processes is performed so that the cathode structure is formed from partially coalesced particles, thereby providing a porous and/or permeable structure having a high surface area. The formation of the cathode structure from partially coalesced particles may be achieved through the choice of the components of the spray used in the spraying process. For example, the spray may include a polymer or a monomer which can cause partial coalescence of the particles. Polymer siloxanes such as polydimethylsiloxane and celluloses such as butyl celluloses may be used for this purpose. The spray may contain a solvent and/or other additives that can be chosen to cause partial coalescence of the spray particles. Without wishing to be bound by any particular theory, it is believed that appropriate control of the spray can cause the particles in the spray to partially dry upon impact with a surface, preventing total coalescence of neighbouring particles. This can give rise to a deposited layer having a large surface area and a highly porous and/or permeable structure.

Each spraying process step may be implemented in a variety of ways. For example, a spraying process step may include spraying an operationally active material, or a precursor thereof, in combination with a supporting matrix material, or a precursor thereof, to form a layer, and curing said layer. A precursor of an operationally active material may be one or more monomers, optionally in combination with an initiator, e.g. a lithium ion conducting polymer electrolyte may be formed by spraying a mixture including one or more lithium salts, and one or more monomers in combination with an initiator, followed by the application of heat to produce polymerisation. One or more lithium salts may be dissolved in a polyethylene oxide monomer such as polyethylene glycol acrylate monomer for this purpose.

Other kinds of operationally active material may be sprayed in the form in which they are to be used, i.e. not in a precursor form. For example, a carbon conductive cathode material and/or nanotubes may be sprayed in combination with a supporting matrix material or a precursor to a supporting matrix material in order to form the cathode structure.

Curing may be performed by suitable techniques such as chemical treatment, heat treatment, and/or evaporation.

Spraying is a convenient process which permits the thickness of the deposited layers to be readily controlled. For example, the electrochemical cell may be a thin cell, and each step may utilise a spraying process which is performed to produce a thin layer. Alternatively, bulk devices may be produced.

Spraying may be performed in accordance with methodologies which are known to the skilled reader. Operationally active material, or a precursor thereof, may be blended with or dispersed in the supporting matrix material or a precursor thereof, and fillers may be added in order to provide desired physical properties, such as flexibility, stiffness, bulk or environmental resistance. The spray may be produced as an aerosol, by nebulisation process, or other "atomisation" techniques. Spraying may be performed using a variety of techniques which are well known to the skilled reader, such as a gravity fed spray, inkjet printing, airbrush printing, rolling, dipping, hand spraying, stencilling, screen printing, direct writing, electrolysis plating and flame spraying.

Protective layers may be applied to the cell as desired.

The method of the second aspect of the invention may be used to manufacture a cell of the first aspect of the invention.

Whilst the invention has been described above, it extends to any inventive combination of the features set out above, or in the following description, drawings and claims.

Embodiments of methods and air-metal electrochemical cells in accordance with the invention will now be described with reference to the single accompanying drawing, which shows a semi-schematic exploded cross sectional view of a lithium-air electrochemical cell of the invention.

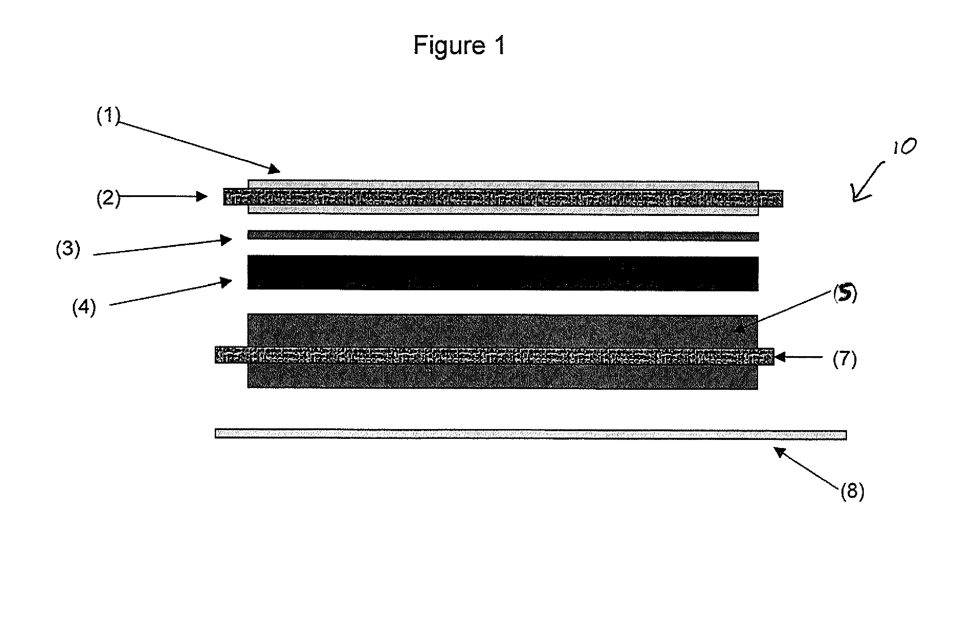

Figure 1 depicts, a semi-schematic form, a lithium-air battery, shown generally at 10, of the invention. The battery 10 comprises an anode 1 formed from a sheet of lithium which is pressed into anode current collector 2 of any suitable material, such as a nickel mesh. A separator 3 which is permeable or porous to lithium ions is employed to separate the anode 2 from a solid electrolyte 4. The electrolyte 4 is also is contact with a cathode structure 5 which is pressed into a cathode current collector 7 which is conveniently a metal mesh such as nickel mesh. The cathode structure 5 is also in contact with an oxygen permeable membrane 8 which, preferably, also prevents the ingress of water. The membrane 8 constitutes an interface between the cathode structure 5 and the atmosphere. Typically, the whole of the cell is encapsulated in an appropriate substance or structure (not shown) with the exception of the interface to the atmosphere.

The invention is intended to improve the power density of the battery by increasing the surface area of the cathode, thereby increasing the amount of oxygen that can participate in the cell chemistry. Additionally, improvements are made to the permeability and porosity of the cathode structure in order to increase the rate of oxygen transport. This leads to a commensurate increase in the rate of energy released, i.e. the power of the battery is increased. The present inventors have realised that the rate at which the metal-air battery chemistry proceeds is largely governed by how much and how quickly oxygen can arrive at the cathode reaction site, i.e., the interface between the cathode structure and the electrolyte. The present inventors have also realised that the area of the interface is significant, since the battery chemistry reaction proceeds faster with a larger surface area. The present invention uses at least one of a number of strategies to address these realisations.

A high interface surface area can be produced by incorporating nano structures such as carbon nanotubes or nano ribbons of graphene into the cathode structure. Additionally, large interface surface areas can be created by manufacturing the cathode structure by a spraying technique which leads to a highly porous and permeable "mountain range" topology at the nano and micrometer size range. This can be achieved even when a coating material is sprayed on to a flat surface. The highly porous and permeable topology can be accomplished through a selection of constituents of the spray, i.e., the polymer to be deposited, solvent system and optionally, other additives. Deposition of polydimethylsiloxane and butyl cellulose or similar polymer systems are preferred, and can cause the spray to partly dry upon impact with the surface preventing total coalescence of neighbouring atomised particles. Other convoluted topologies which give rise to large surface areas can be achieved using nano and micro scale engineering processes such as etching and embossing. For example, so called "Gecko feet" or other large surface area structures can be produced.

The inclusion of an amount of oxygen permeable siloxane such as polydimethylsiloxane in the cathode structure can aid in the permeation of oxygen through the cathode structure. A further advantage is that the oxygen permeable siloxane can act as a binder for the cathode structure, which typically comprises carbon. A butyl cellulose can also be used to aid the permeation of oxygen. To further improve oxygen transport, a highly porous gel, such as silica gel, can be incorporated in the cathode structure. This serves to introduce fast transport channels for oxygen diffusing into the cathode structure.

It can be advantageous to incorporate highly electrically conductive metal powder into the cathode structure, preferably spiky nickel powder, fine nickel fibre or whiskers, or nano powder to increase the electrically conductive conductivity and electrical permeation of the cathode structure, and hence improve electrical transport between the cathode reaction sites and the cathode current collector. The composition of the cathode structure can be graded between the interface with the electrolyte and the cathode current collector. The carbon content of the cathode structure can be made to be highest at the interface with the electrolyte, with its contents being reduced between the interface with the electrolyte and the cathode current collector. The content of the oxygen permeable siloxane (or other substantially oxygen permeable additive) and highly electrically conductive metal powder can be increased between these two locations. This allows the transport of oxygen and electrons to be improved. The use of a spraying process to manufacture the cathode structure conveniently allows such grading of the components of the cathode structure to be achieved.

The oxygen permeable membrane 8 can be formed from a thin layer of a permeable siloxane. Conveniently, this also reduces the ingress of water into the battery, since siloxanes have water repelling properties. Usefully, an additional membrane can be provided over the oxygen permeable membrane. The additional membrane is impermeable to oxygen, but can be peeled off when activation of the battery is required. An aluminised polymer film such as polydifluoroethylene can be used to produce the further membrane.

### Example 1

This example demonstrates how a highly porous and permeable sprayed coating can be realised. Colloidal silica is used to increase porosity, and a highly permeable polymer (cellulose acetate butyrate) is used to bind the colloidal silica. Colloidal silica can be prepared by hydrolysis of alkoxides of silicon using well known methods. However, it is convenient to utilise a method in which a sample of commercially available colloidal silica (Nyacol DP5540) is obtained and the ethylene glycol carrying fluid is replaced with ethanol. This is achieved by precipitating the silica by addition of acetone. The solid was collected by centrifugation and was then repeatedly washed well with acetone and centrifuged. Finally, the solid was re-dispersed in de-nature ethanol with the aid of mechanical stirring and ultrasonifcation. The product typically contained 30 - 30wt% but higher concentrations (>45wt%) are achievable. An ethanolic colloidal suspension of silica (320 ml) containing 35wt% solid was added slowly to a stirred solution of cellulose acetate butyrate (typically Mn 30000 to 60000) (25g) in butyl acetate (500ml). This mixture was sprayed from De Vilbiss spray gun to provide a network which is highly porous to oxygen.

### Example 2

A spray solution was produced in accordance with Example 1, except that carbon nanotubes (Arkema Graphistrength C100) (0.5 to 10g, typically 2g) were dispersed in butyl acetate (150ml) using an ultrasonic probe (Ultrasonic Power Corporation www.upcorp.com, Model 2000L) for two periods of fifteen minutes at a power level of 250-300 in continuous mode. The silica gel in ethanol was then added as described in Example 1. A network having a high surface area which is highly porous to oxygen was produced.

Other solvent systems can be employed, depending on the nature of the polymer, other additives or solutes. For example, some siloxanes are more compatible with toluene solvent. By adjustment of the amount of coating material being atomised, highly "mountainous" and highly porous coatings can be prepared. Magnesium dioxide and nickel powder, fibre or whiskers can be added to the coating material described in Examples 1 and 2.

It is preferred that the electrolyte 4 is a solid electrolyte. A solid electrolyte can be prepared by, for example, dissolving lithium salts in a suitable monomer such as a polyethylene oxide monomer (for example a polyethylene glycol acrylate monomer), and polymerising the mixture. A spraying technique can be used in order to deposit the electrolyte.

Numerous variations of the inventions are possible. For example, the electrochemical cell can be fabricated by sequential addition of layered components starting from the anode, the cathode, or the electrolyte. By judicious selection of the polymer used in the electrolyte and as a supporting matrix material in the cathode structure, the electrochemical cell can be manufactured to be flexible or rigid. If desired, the cell could be largely or completely manufactured using spraying techniques. It is possible, and can be advantageous, to produce a thin electrochemical cell wherein the electrolyte, cathode structure and, optionally, any sealing membranes are thin. This can improve the transport of oxygens, ions and electrons in the electrochemical cell.

## Claims

1. A metal-air electrochemical cell including a solid cathode structure and a cathode current collector in conductive communication with the cathode structure, in which the cathode structure has an electrolyte facing surface which forms an interface with an electrolyte;
wherein the cathode structure includes at least one of: an electrolyte facing surface having a convoluted topology at a micro scale or nano scale, providing a high surface area in comparison to a planar surface; a substantially oxygen permeable additive; and a porous additive which is substantially porous to oxygen, thereby enhancing oxygen availability at the electrolyte facing surface and/or enhancing oxygen transport across the cathode structure.

2. A metal-air electrochemical cell according to claim 1 in which the substantially oxygen permeable additive acts as a supporting matrix material.

3. A metal-air electrochemical cell according to claim 1 or claim 2 in which the substantially oxygen permeable additive is an oxygen permeable siloxane.

4. A metal-air electrochemical cell according to claim 3 in which the oxygen permeable siloxane is poly dimethylsiloxane.

5. A metal-air electrochemical cell according to claim 1 or claim 2 in which the substantially oxygen permeable additive is a cellulose polymer.

6. A metal-air electrochemical cell according to any previous claim including a porous additive, wherein the porous additive is a gel.

7. A metal-air electrochemical cell according to any previous claim wherein the cathode structure includes nano structures thereby providing an electrolyte facing surface having a convoluted topology.

8. A metal-air electrochemical cell according to claim 7 in which the nano structures are formed from carbon, and preferably are carbon nanotubes or graphene nanoribbons.

9. A metal-air electrochemical cell according to any previous claim in which the electrolyte facing surface is etched or embossed, thereby providing the convoluted topology.

10. A metal-air electrochemical cell according to any previous claim in which the electrolyte facing surface is formed from partially coalesced particles, thereby providing the convoluted topology.

11. A metal-air electrochemical cell according to any previous claim in which the cathode structure further includes electrically conductive metal particles of micro or nano scale.

12. A metal-air electrochemical cell according to any previous claim in which the cathode structure includes a conductive cathode material, and the concentration of the conductive cathode material is graded from the cathode current collector to the electrolyte facing surface so that the highest conductive cathode material concentration is at the electrolyte facing surface.

13. A method of manufacturing a metal-air electrochemical cell including the step of forming a solid cathode structure by depositing material in a spraying process.

14. A method according to claim 13 further including the step of forming a solid electrolyte by depositing material in a spraying process.

15. A method according to claim 13 or claim 14 in which, during the step of forming the solid cathode structure, the spraying process is performed so that the cathode structure is formed from partially coalesced particles, thereby providing a porous and/or permeable structure having a high surface area.
